# EUROPÄISCHE PATENTSCHRIFT

(11) **EP 2 897 759 B1**
(45) Veröffentlichungstag und Bekanntmachung des Hinweises auf die Patenterteilung: **25.04.2018**
(21) Anmeldenummer: 13765954.6
(22) Anmeldetag: 19.09.2013
(51) Int. Cl.: B23K 26/14

(54) **RINGDÜSE FÜR EINEN LASERBEARBEITUNGSKOPF UND LASERBEARBEITUNGSKOPF**
RING DIE FOR A LASER MACHINING HEAD AND LASER MACHINING HEAD
BUSE ANNULAIRE POUR UNE TÊTE D'USINAGE AU LASER ET TÊTE D'USINAGE AU LASER

(30) Priorität: 21.09.2012 DE 102012217082
(43) Veröffentlichungstag der Anmeldung: 29.07.2015
(73) Patentinhaber: TRUMPF Laser GmbH, 78713 Schramberg (DE)
(72) Erfinder: BROGHAMMER, Gerhard, 78662 Bösingen (DE); ROMINGER, Volker, 70193 Stuttgart (DE)
(74) Vertreter: Kohler Schmid Möbus Patentanwälte
(86) Internationale Anmeldenummer: PCT/EP2013/002818
(87) Internationale Veröffentlichungsnummer: WO 2014/044393

(56) Entgegenhaltungen:
- EP-A2- 0 458 181
- WO-A2-01/38038
- DE-A1- 3 801 068
- DE-A1-102004 031 881
- DE-A1-102006 043 693
- DE-A1-102006 045 554
- DE-U1-202005 016 574
- GB-A- 1 477 710
- US-A- 5 915 316

## Beschreibung

Die Erfindung betrifft eine Ringdüse für einen Laserbearbeitungskopf zum Einbringen eines Hilfsgases in einen die Bearbeitungszone des Werkstücks umgebenden Bereich. Die Erfindung betrifft auch einen Laserbearbeitungskopf mit einer solchen Ringdüse.

Beim Laserschweißen von Werkstücken bildet sich in der Bearbeitungszone des Werkstücks eine so genannte Kapillare aus, in der das zu bearbeitende Werkstück lokal aufgeschmolzen wird. Aus der Kapillare bzw. einem die Kapillare umgebenden Schmelzbad tritt aufgrund der durch den Laserstrahl kontinuierlich hohen Energieeinkopplung Metalldampf aus, der in Form von kleinen Partikeln in einem die Bearbeitungszone umgebenden Bereich aufsteigt. Ein Teil der von dem Laserbearbeitungskopf erzeugten Laserstrahlung wird von den Metalldampf-Partikeln absorbiert, wodurch sich diese erhitzen und aufgrund ihrer sehr hohen Temperatur Wärmestrahlung aussenden, d.h. es kommt zur Ausbildung einer so genannten Metalldampffackel.

Die räumliche Gestalt bzw. die Ausdehnung der Metalldampffackel während der Bearbeitung kann zeitlich und örtlich stark variieren. Entsprechend ändert sich im Umgebungsmedium die Temperatur und damit einhergehend der Brechungsindex zeitlich und örtlich ebenfalls stark, so dass sich eine so genannte thermische Linse ausbildet, die eine Ablenkung der Laserstrahlung mit hoher zeitlicher Dynamik bewirkt. Die dadurch bewirkte zeitlich und örtlich inhomogene Energieeinkopplung in das Werkstück hat typischer Weise einen negativen Einfluss auf die Qualität der Werkstückbearbeitung: Durch die vorbeschriebene Wechselwirkung kommt es beispielsweise zu Schweißspritzern, Schweißnahtschwankungen in Form von unregelmäßigen Nahtoberraupen bzw. allgemein zu einer verschlechterten Nahtgeometrie.

Die Ausbildung einer Metalldampffackel (aber auch die Ausbreitung von Schweißgasen, Schmauch etc.) ist ferner mit dem Problem behaftet, dass sich der aufsteigende Metalldampf bzw. die in den aufsteigenden Schweißgasen enthaltenen Partikel zunehmend an dem Laserbearbeitungskopf (beispielsweise an der Fokussieroptik) absetzen können und zu einer Beeinträchtigung der Funktionsweise des Laserbearbeitungskopfes führen können, bspw. durch eine thermisch induzierte Fokuslagenverschiebung. Besonders ausgeprägt ist diese Gefahr durch während der Laserbearbeitung auftretende Metallspritzer, die unkontrolliert von der Schmelze der Kapillare in Richtung des Laserbearbeitungskopfes, insbesondere der Fokussieroptik, geschleudert werden.

Um ein verbessertes Prozessergebnis (beispielsweise eine verbesserte Nahtqualität) zu erhalten, ist es aus der DE 20 2004 017 854 U1 bekannt, die Wechselwirkung der Laserstrahlung mit der Metalldampffackel zu reduzieren. Dies wird dadurch erreicht, dass ein unterhalb einer Bearbeitungsoptik liegender Bereich des fokussierten Laserstrahls durch mindestens einen Gasstrom weitestgehend frei von einem Gemisch aus Schweißgasen und warmer Umgebungsluft gehalten wird, indem der Gasstrom auf den fokussierten Laserstrahl gerichtet wird und den Laserstrahl durchdringt. Der Gasstrom kann zu diesem Zweck schräg auf die Bearbeitungszone und/oder schräg auf einen Bereich vor der Bearbeitungszone am Werkstück gerichtet werden. Der Gasstrom bzw. die Gasströme wird/werden mittels einer oder mehrerer Gasdüsen erzeugt, beispielsweise mittels einer koaxial zum Laserstrahl angeordneten Ringdüse.

Um den Laserbearbeitungskopf bzw. die Fokussieroptik (sowie die vorbeschriebenen Gasdüsen bzw. die Koaxialdüse) vor auftretenden Metallspritzern zu schützen, ist es unter anderem aus der oben genannten DE 20 2004 017 854 U1 bekannt, einen vergleichsweise starken, quer zum einfallenden Laserstrahl ausgerichteten und optiknah angeordneten Querluftstrom (engl. Crossjet) einzusetzen, der die möglicherweise auftretenden Metallspritzer erfasst und ablenkt, bevor sie den Laserbearbeitungskopf bzw. die Fokussieroptik erreichen und diesen gegebenenfalls beschädigen.

Um den bereits beschriebenen thermischen Linseneffekt mit Hilfe eines Querluftstroms zu minimieren, muss dieser möglichst nahe an das Werkstück gebracht werden. Dadurch ergibt sich zum einen das Problem der Störkontur, zum anderen können die eingesetzte(n) Gasdüse(n), wenn sie vergleichsweise nahe an der Bearbeitungszone des Werkstücks angeordnet sind, relativ leicht durch den aufsteigenden Metalldampf (bzw. die Metalldampffackel) oder durch aus der Schmelze geschleuderte Metallspritzer verunreinigt werden. Ab einem bestimmten Verschmutzungsgrad ist eine Unterbrechung des Laserbetriebs zur Reinigung bzw. zum Austausch der Gasdüse(n) erforderlich, um deren Funktionsweise zu gewährleisten und eine Verschlechterung der Nahtqualität zu verhindern. Zudem kann Metalldampf um den Querluftstrom strömen, wodurch es oberhalb des Querluftstroms wiederum zu der bereits beschriebenen Verunreinigung durch Metallspritzer kommen kann. Wird der Querluftstrom in das Schmelzbad geblasen, kann die Nahtqualität negativ beeinflusst werden.

Aus der US 2009/0134132 A1 ist eine Koaxialdüse bekannt geworden, durch die ein erster, schneller Gasstrom austritt, der während des Laserschweißens einen dynamischen Gasdruck auf eine am Werkstück gebildete Kapillare erzeugt, sodass die Kapillare geöffnet bleibt und die Hydrodynamik des Schmelzbades stabilisiert wird, um den Auswurf von Metallspritzern in Richtung des Laserbearbeitungskopfes zu verhindern. Ein zweiter, den ersten umgebender langsamer Gasstrom dient zur Verhinderung des Kontakts der Schmelze mit dem Sauerstoff der Umgebungsluft.

Die DE 10 2006 045 554 A1 zeigt eine Ringdüse mit den Merkmalen des Oberbegriffs von Anspruch 1.

### Aufgabe der Erfindung

Der Erfindung liegt die Aufgabe zugrunde, die Flexibilität beim Gebrauch der eingangs genannten Ringdüse zu erhöhen.

### Gegenstand der Erfindung

Die Aufgabe wird gelöst durch eine Ringdüse mit den Merkmalen des Anspruchs 1.
Das Vorsehen einer einzigen Austrittsöffnung an dem Wechselring kann insbesondere für das Schweißen von Linearnähten sinnvoll sein. Die Ringdüse kann entlang der Laserstrahlachse verschiebbar an einem Laserbearbeitungskopf gelagert und in unterschiedlichen Positionen entlang der Laserstrahlachse festlegbar sein. Es ist aber auch möglich, die Ringdüse ohne die Möglichkeit einer Verschiebung an dem Laserbearbeitungskopf zu lagern. Beispielsweise kann in diesem Fall eines der Ringteile starr mit dem Laserbearbeitungskopf verbunden werden. Durch das Lösen der Verbindung mit dem anderen Ringteil ist auch in diesem Fall ein Austausch des Wechselrings möglich.

Der mit der Ringdüse verbundene Vorteil besteht unter anderem darin, dass die Mehrteiligkeit der Ringdüse eine leichte und schnelle Handhabung des Wechselrings ermöglicht. Der Wechselring kann somit bei einem (gegebenenfalls auch nur teilweisen) Verschluss der mindestens einen Austrittsöffnung durch Metallspritzer oder abgelagerten Metalldampf leicht entnommen und gegen einen neuen Wechselring ersetzt werden, ohne die gesamte Ringdüse austauschen zu müssen. Auch ist es zum Austausch des Wechselrings in der Regel nicht erforderlich, die mit der Ringdüse verbundene Hilfsgas-Zuführung von der Ringdüse zu entfernen. An Stelle eines Austauschs kann der Wechselring auch auf einfache Weise entnommen, gereinigt und anschließend wieder in die Ringdüse eingesetzt werden.

Darüber hinaus kann in vorteilhafter Art und Weise durch die schnelle und leichte Austauschbarkeit des Wechselrings je nach Bearbeitungsabstand zwischen Laserbearbeitungskopf und Werkstück bzw. je nach aktuell eingestellter Fokuslage eine andere Art von Wechselring eingesetzt werden. Insbesondere können Wechselringe verwendet werden, bei denen die jeweilige Ausrichtung der mindestens einen Austrittsöffnung, genauer gesagt der Betrag des Winkels, unter dem die Austrittsöffnung zur Laserstrahlachse ausgerichtet sind, sich voneinander unterscheiden. Da die Längsachsen der Austrittsöffnung(en) bzw. -bohrungen im Wesentlichen parallel zur konischen Mantelfläche des fokussierten Laserstrahls ausgerichtet sein sollten, hängt die Wahl eines geeigneten Winkels für die Ausrichtung von der Brennweite des Laserstrahls ab, welche den Öffnungswinkel der konischen Mantelfläche des fokussierten Laserstrahls beeinflusst. Auch können gegebenenfalls mehrere Arten von Wechselringen mit unterschiedlicher (Innen-)Geometrie der Austrittsöffnung(en) und/oder mit einer unterschiedlichen Anzahl von Austrittsöffnungen verwendet werden. Durch die Möglichkeit, mittels einer Mehrzahl von jeweils unterschiedlichen Wechselringen das Strömungsbild im Bereich nahe der Bearbeitungszone zu beeinflussen, kann eine verbesserte Prozessbegasung erreicht werden, d.h. ein verbessertes, insbesondere weniger Hilfsgas benötigendes, Freihalten des vom Laserstrahl durchdrungenen Volumens von Schweißgasen, Metalldämpfen bzw. der Metalldampffackel.

Bei einer bevorzugten Ausführungsform ist an dem Wechselring eine Mehrzahl von Austrittsöffnungen für das Hilfsgas ausgebildet, die bevorzugt in regelmäßigen Abständen in Umfangsrichtung an dem Wechselring angeordnet sind. Die Austrittsöffnungen sind somit bevorzugt in einem regelmäßigen Muster, insbesondere in einem um eine Rotationsachse der Ringdüse drehsymmetrischen Muster, an dem Wechselring ausgebildet und bewirken eine gleichmäßigere Durchdringung des Strahlwegs des Laserstrahls bzw. dessen Umgebung mit dem Hilfsgas. Auf diese Weise kann die auftretende Metalldampffackel in effizienter Art und Weise aus dem werkstücknahen Bearbeitungsbereich verdrängt werden.

Bei einer bevorzugten Weiterbildung der vorhergehenden Ausführungsform weisen die mindestens eine Austrittsöffnung des Wechselrings einen in Längsrichtung der Austrittsöffnung variierenden Strömungsquerschnitt auf. Der variierende Strömungsquerschnitt bewirkt eine im Vergleich zu Bohrungen konstanten Durchmessers stärkere Ausrichtung der Austrittsströmung, wobei die Austrittsströmung darüber hinaus eine höhere Austrittsgeschwindigkeit aufweisen kann. Der Strömungsquerschnitt der Austrittsöffnungen kann beispielsweise einen konvergent-divergenten Verlauf aufweisen. Durch eine geeignete Wahl eines variierenden Strömungsquerschnitts der Austrittsöffnungen im Wechselring kann das Strömungsbild im werkzeugnahen Bereich der Bearbeitung gezielt beeinflusst werden.

Bevorzugt ist auch eine Weiterbildung der Ringdüse, bei der die Längsachse der mindestens einen Austrittsöffnung unter einem (spitzen) Winkel zur Rotationsachse der Ringdüse ausgerichtet ist. Der Winkel kann hierbei so gewählt werden, dass die durch die Ringdüse bewirkte Gasströmung im Wesentlichen parallel zur konischen Mantelfläche des fokussierten Laserstrahls verläuft, wodurch eine besonders effiziente Verdrängung der Metalldampffackel und somit eine besonders effiziente Verhinderung der Ausbildung einer thermischen Linse erreicht werden kann.

Schließlich sind bei einer bevorzugten Ausführungsform das erste Ringteil und/oder das zweite Ringteil und/oder der Wechselring miteinander verschraubt. Durch die gegenseitige Verschraubung des ersten und zweiten Ringteils können diese zum Austauschen bzw. Ersetzen des Wechselrings besonders einfach und schnell voneinander getrennt und anschließend wieder zusammengefügt werden, wobei die Verschraubung auch eine gasdichte Verbindung erlaubt. Der Wechselring wird bevorzugt zwischen das erste und das zweite Ringteil eingelegt und beim Verschrauben zwischen den beiden Ringteilen verklemmt. Alternativ kann der Wechselring ebenfalls mit dem ersten und/oder dem zweiten Ringteil verschraubt werden. Es versteht sich, dass auch andere Möglichkeiten zur Realisierung einer lösbaren Verbindung zwischen dem ersten Ringteil, dem zweiten Ringteil und dem Wechselring bestehen, beispielsweise kann eine Verrastung vorgesehen werden. In allen oben beschriebenen Fällen können gegebenenfalls zur Ausbildung eines gasdichten Gasverteilungsraums Dichtungselemente an den Ringteilen bzw. an dem Wechselring vorgesehen werden.

Durch die Möglichkeit, den Betrag des Winkels, unter dem die Austrittsöffnung(en) zur Laserstrahlachse ausgerichtet sind, sowie weitere Geometrie-Parameter der Austrittsöffnungen, beispielsweise den Öffnungsdurchmesser der Austrittsöffnungen, über die Wahl des Wechselrings einzustellen, kann unter anderem der Volumenstrom, der für die Verdrängung der Metalldampffackel aus dem Strahlweg der Laserstrahlung benötigt wird, entsprechend den Erfordernissen der jeweiligen Bearbeitungssituation (beispielsweise unterschiedliche Arbeitsabstände zwischen dem Werkstück und dem Laserbearbeitungskopf) angepasst werden. Durch die Wahl des Winkels, unter dem die Austrittsöffnungen zur Laserstrahlachse ausgerichtet sind, kann zudem deren Wirkbereich, also der Bereich, in dem das aus der Ringdüse austretende Hilfsgas die bei der Laserbearbeitung des Werkstücks entstehenden Schweißgase (bzw. die Metalldampffackel) verdrängt, gezielt und situationsspezifisch angepasst werden.

Die Erfindung betrifft auch einen Laserbearbeitungskopf, welcher eine Fokussieroptik zur Fokussierung eines Laserstrahls auf eine Bearbeitungszone eines Werkstücks sowie eine koaxial zur Laserstrahlachse angeordnete Ringdüse zum Einbringen eines Hilfsgases in einen die Bearbeitungszone des Werkstücks umgebenden Bereich umfasst, die wie weiter oben beschrieben ausgebildet ist.

Die Ringdüse kann entlang der Laserstrahlachse verschiebbar an dem Laserbearbeitungskopf gelagert und an dem Laserbearbeitungskopf in unterschiedlichen Positionen entlang der Laserstrahlachse festlegbar sein. Die Ringdüse bleibt bei der Verschiebung typischer Weise koaxial zur Laserstrahlachse ausgerichtet, d.h. die Rotationsachse der Ringdüse fällt im Laserbetrieb des Laserbearbeitungskopfes mit der Laserstrahlachse zusammen.

Durch die Möglichkeit, die Ringdüse relativ zum Gehäuse des Bearbeitungskopfs, in dem die Fokussieroptik untergebracht ist, entlang der Laserstrahlachse an unterschiedlichen Positionen zuzustellen bzw. am Gehäuse oder einem Gehäuseabschnitt festzulegen, kann unter anderem der Volumenstrom, der für die Verdrängung der Metalldampffackel aus dem Strahlweg der Laserstrahlung benötigt wird, entsprechend den Erfordernissen der jeweiligen Bearbeitungssituation (beispielsweise unterschiedliche Arbeitsabstände zwischen dem Werkstück und dem Laserbearbeitungskopf) angepasst werden. Die Verschiebbarkeit der Ringdüse entlang der Laserstrahlachse erlaubt es in vorteilhafter Weise, eine Position der Ringdüse zu wählen, bei welcher der für die Verdrängung der Metalldampffackel aus dem Strahlweg der Laserstrahlung erforderliche Volumenstrom minimiert wird. Eine geeignete Position der Ringdüse entlang der Laserstrahlachse, bei welcher ein möglichst geringer Volumenstrom erforderlich ist, um die Metalldampffackel wirksam zu unterdrücken, kann für vorgegebene Bearbeitungsparameter (Arbeitsabstand zum Werkstück bzw. Brennweite der Fokussieroptik, Vorschubgeschwindigkeit, Art des bearbeiteten Werkstücks, etc.) experimentell oder mit Hilfe von Strömungssimulationen ermittelt werden. Die entsprechenden Informationen können beispielsweise in einer Datenbank abgelegt werden, auf die ein Bediener oder ggf. die Steuereinrichtung einer Laserbearbeitungsmaschine zugreifen kann, um die Ringdüse in eine geeignete Position zu verschieben und dort festzulegen.

Durch die Höhenverstellbarkeit der Ringdüse kann zudem deren Wirkbereich, also der Bereich, in dem das aus der Ringdüse austretende Hilfsgas die bei der Laserbearbeitung des Werkstücks entstehenden Schweißgase (bzw. die Metalldampffackel) verdrängt, gezielt und situationsspezifisch angepasst werden. Die Einsetzbarkeit des Laserbearbeitungskopfes ist durch die Höhenverstellbarkeit der Ringdüse somit wesentlich verbessert. Es ist insbesondere eine flexiblere Handhabung des Laserbearbeitungskopfes bei unterschiedlichen Bearbeitungssituationen (variierende Arbeitsabstände, Brennweiten, Vorschubgeschwindigkeiten, etc.) möglich.

Die Ringdüse kann starr mit einem rohrförmigen Abschnitt einer Zuführung für das Hilfsgas verbunden sein, der in Richtung der Laserstrahlachse verläuft. Durch die starre Verbindung des (starren) rohrförmigen Abschnitts der Zuführung mit der Ringdüse ist die Handhabung der Ringdüse, insbesondere die Einstellung unterschiedlicher Abstände zur Fokussieroptik bzw. zum zu bearbeitenden Werkstück vereinfacht. Durch die starre Verbindung kann die koaxiale Ausrichtung der Ringdüse zum Laserbearbeitungskopf bzw. zur Laserstrahlachse eingehalten werden. Die Zuführung für das Hilfsgas, welche über den rohrförmigen Abschnitt führt, kann gasdicht mit der Ringdüse verbunden werden, beispielsweise über einen Adapter, welcher eine Umlenkung des Hilfsgasstroms aus dem rohrförmigen Abschnitt um ca. 90° bewirkt und damit eine Zuführung des Hilfsgases über eine seitliche Eintrittsöffnung der Ringdüse ermöglicht.

Der rohrförmige Abschnitt kann an dem Laserbearbeitungskopf verschiebbar gelagert sein. Durch die verschiebbare Lagerung des rohrförmigen Abschnitts, mit dem die Ringdüse starr verbunden ist, kann eine besonders einfache und effiziente Verschiebbarkeit der Ringdüse realisiert werden. Insbesondere kann in vorteilhafter Weise auf weitere Lagerungsmechanismen, wie beispielsweise zusätzliche Führungen oder dergleichen, verzichtet werden. Stattdessen wird in vorteilhafter Weise ein für den Betrieb der Ringdüse eingesetzter Abschnitt der Zuführung rohrförmig (starr) ausgebildet, sodass der Abschnitt selbst zur Realisierung der verschiebbaren Lagerung der Ringdüse beiträgt. Der rohrförmige Abschnitt kann ggf. mittels eines steuerbaren Antriebs, beispielsweise mittels eines Linearantriebs entlang des Laserbearbeitungskopfs (parallel zur Laserstrahlachse) verschoben und in unterschiedlichen Positionen festgelegt bzw. zugestellt werden, um eine automatisierte Verschiebung der Ringdüse zu realisieren.

Der Laserbearbeitungskopf kann zusätzlich eine Klemmeinrichtung zur klemmenden Festlegung des rohrförmigen Abschnitts an dem Laserbearbeitungskopf aufweisen. Auf diese Weise ist eine Festlegung der Ringdüse in dem jeweils gewünschten Abstand zur Fokussieroptik bzw. zum Werkstück in einfacher Art und Weise realisierbar. Die Klemmeinrichtung wird typischer Weise von einem Bediener betätigt, es ist aber ggf. auch möglich, die Klemmung des rohrförmigen Abschnitts automatisiert vorzunehmen. Um die Festlegung in einer gewünschten Position entlang der Laserstrahlachse zu vereinfachen, können an dem Laserbearbeitungskopf, genauer gesagt an dem zur Führung dienenden Gehäuseabschnitt, Markierungen bzw. eine Skala vorgesehen werden.

Die Ringdüse kann mindestens eine, bevorzugt eine Mehrzahl von Austrittsöffnungen aufweisen, die jeweils unter einem (typischer Weise gleich großen) Winkel zur Laserstrahlachse ausgerichtet sind. In einer Ebene senkrecht zur Laserstrahlachse sind die Austrittsöffnungen in radialer Richtung auf die Rotationsachse der Ringdüse ausgerichtet, welche der Laserstrahlachse entspricht. Die Austrittsöffnungen sind in Umfangsrichtung typischer Weise in regelmäßigen Abständen entlang der Ringdüse verteilt. Auf diese Weise kann durch die Mehrzahl an Austrittsöffnungen der Strahlweg des Laserstrahls gleichmäßig von dem Hilfsgas durchdrungen werden. Dieses verdrängt somit in gleichmäßiger Art und Weise die auftretende Metalldampffackel aus dem werkstücknahen Volumenbereich bzw. aus dem Strahlweg des Laserstrahls. Der geringste Volumenstrom zur Unterdrückung der Metalldampffackel wird in der Regel benötigt, wenn die Ringdüse in einem Arbeitsabstand angeordnet wird, in dem sich die Längsachsen der Austrittsöffnungen auf dem Werkstück schneiden.

Es hat sich als günstig erwiesen, wenn die Längsachsen der Austritts(düsen-)Öffnungen, die z.B. als Bohrungen ausgebildet sein können, im Wesentlichen parallel zur konischen Mantelfläche des fokussierten Laserstrahls ausgerichtet sind. Da die Brennweite der Fokussieroptik des Laserbearbeitungskopfs gegebenenfalls in Abhängigkeit von den Bearbeitungsparametern verändert werden kann, kann es vorteilhaft sein, die Ausrichtung der Austrittsöffnungen, genauer gesagt den Winkel zur Laserstrahlachse, entsprechend anzupassen. Hierdurch können besonders hochwertige Bearbeitungsergebnisse (beispielsweise besonders gleichmäßige Nahtgeometrien am Werkstück) erreicht werden.
Weitere Vorteile und vorteilhafte Ausgestaltungen des Gegenstands der Erfindung ergeben sich aus der Beschreibung, den Ansprüchen und der Zeichnung. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

### Es zeigen:

- Fig. 1: einen Laserbearbeitungskopf in einer perspektivischen Ansicht;
- Fign. 2a,b: einen Gehäuseabschnitt des Laserbearbeitungskopfs aus Fig. 1 mit einer Ringdüse in einer ersten Position, in der diese am Laserbearbeitungskopf anliegt, sowie in einer zweiten, vom Laserbearbeitungskopf beabstandeten Position;
- Fig. 3: eine Seitenansicht des Gehäuseabschnitts aus Fign. 2a,b sowie eines auf eine Bearbeitungszone eines Werkstücks fokussierten Laserstrahls;
- Fig. 4: einen Querschnitt durch eine Ausführungsform der Ringdüse; und
- Fig. 5: eine Explosionsdarstellung der Ringdüse gemäß Fig. 4.

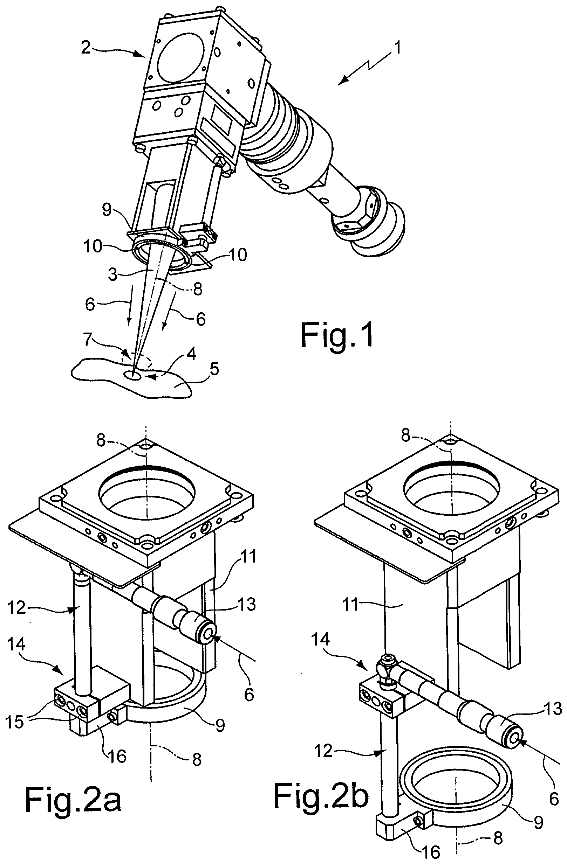

**Fig. 1** zeigt einen Laserbearbeitungskopf 1 mit einer Fokussieroptik 2, die zur Fokussierung eines Laserstrahls 3 auf eine Bearbeitungszone 4 eines Werkstücks 5 dient und die beispielsweise eine Fokussierlinse und/oder einen fokussierenden Spiegel umfassen kann. Die Fokussieroptik 2 ist im Inneren des Laserbearbeitungskopfs 1 angeordnet und daher in Fig. 1 nicht im Detail gezeigt. Das Werkstück 5 kann mittels des Laserstrahls 3 trennend (Laserschneiden, Laserabtragen) oder fügend (Laserschweißen bzw. Laserauftragsschweißen) bearbeitet werden, wobei im vorliegenden Fall eine fügende Bearbeitung vorgesehen ist.

Beim Laserschweißen wird das Werkstück 5 in der Bearbeitungszone 4 durch den Laserstrahl 3 aufgeschmolzen und es kann Metalldampf von der Werkstückoberfläche in Richtung des Laserbearbeitungskopfes 1 aufsteigen (nicht dargestellt). Werden keine Schutzmaßnahmen ergriffen, so werden Teile der Laserstrahlung 3 von dem aufsteigenden Metalldampf absorbiert und anschließend als von dem Metalldampf ausgehende Wärmestrahlung (als so genannte Metalldampffackel) emittiert. Hierdurch entsteht eine so genannte thermische Linse, die für die Qualität der Laserbearbeitung des Werkstücks 5 aufgrund ihrer sowohl zeitlichen als auch örtlich stark wechselnden Ausprägung ungünstig ist (es entstehen beispielsweise unregelmäßige Nahtoberraupen, sowie Schweißspritzer).

Um diesem Effekt entgegen zu wirken, weist der Laserbearbeitungskopf 1 zum Einbringen eines Hilfsgases (in Fig.1 durch Pfeile 6 dargestellt) in einen (Bearbeitungs-)Bereich 7, der die Bearbeitungszone 4 des Werkstücks 5 umgibt, eine koaxial zur Laserstrahlachse 8 angeordnete Ringdüse 9 auf. Mithilfe der Ringdüse 9 kann das Hilfsgas 6 in den Bearbeitungsbereich 7 (insbesondere in den Bereich um den Laserstrahl 3 herum bzw. in diesen hinein) geleitet werden, wodurch eine Metalldampffackel bzw. Metalldampf aus dem Bearbeitungsbereich 7 verdrängt wird und verhindert wird, dass dieser in das vom Laserstrahl 3 durchstrahlte Volumen eindringt. Auf diese Weise kann die Ausbildung der thermischen Linse mit ihren nachteiligen Folgen verhindert oder zumindest abgeschwächt werden. Zur Verteilung bzw. Einleitung des Hilfsgases 6 in den Bearbeitungsbereich 7 weist die Ringdüse 9 eine Mehrzahl von Austrittsöffnungen 10 auf, von denen beispielhaft zwei in Fig. 1 dargestellt sind.

In **Fign. 2a,b** ist ein Gehäuseabschnitt 11 des Laserbearbeitungskopfs 1 aus Fig.1 sowie die Ringdüse 9 dargestellt. Zur Vereinfachung wurde auf die Darstellung der Fokussieroptik 2 sowie des fokussierten Laserstrahls 3 verzichtet. Die Ringdüse 9 ist entlang der Laserstrahlachse 8 verschiebbar an dem Gehäuseabschnitt 11 des Laserbearbeitungskopfs 1 gelagert, wobei in Fig. 2a die Ringdüse 9 in einer ersten (oberen) Position dargestellt ist, in der diese am unteren Ende des Gehäuseabschnitts 11 anliegt, welcher einen ersten Endanschlag für die Ringdüse 9 bildet und wobei in Fig. 2b die Ringdüse 9 in einer zweiten (unteren) Position dargestellt ist, in der die Ringdüse 9 vom Gehäuseabschnitt 11 beabstandet ist. Die Ringdüse 9 kann an dem Gehäuseabschnitt 11 in weiteren zwischen der oberen und der unteren Position liegenden Positionen entlang der Laserstrahlachse 8 angeordnet werden und ist dort jeweils festlegbar.

Zur verschiebbaren Lagerung der Ringdüse 9 an dem Gehäuseabschnitt 11 ist ein rohrförmiger Abschnitt 12 einer Hilfsgas-Zuführung 13 vorgesehen, der an eine (nicht gezeigte) Hilfsgas-Erzeugungseinrichtung angeschlossen werden kann. Über den rohrförmigen (starren) Abschnitt 12 der Zuführung 13 kann das Hilfsgas 6 in die Ringdüse 9 geleitet werden, die starr mit dem rohrförmigen Abschnitt 12 verbunden ist. Der rohrförmige Abschnitt 12 der Zuführung 13 ist an dem Gehäuseabschnitt 11 verschiebbar gelagert.

An dem Gehäuseabschnitt 11 des Laserbearbeitungskopfs 1 ist ferner zur klemmenden Festlegung des rohrförmigen Abschnitts 12 eine Klemmeinrichtung 14 vorgesehen. Die Klemmeinrichtung 14 weist in Fign. 2a,b zur Aufnahme des rohrförmigen Abschnitts 12 eine Bohrung auf, deren Durchmesser durch das Ein- bzw. Ausdrehen von Klemmschrauben 15 verändert werden kann. Ist der Durchmesser entsprechend verringert, so ist die Reibung zwischen der Aufnahme bzw. Bohrung der Klemmeinrichtung 14 und dem rohrförmigen Abschnitt 12 ausreichend groß, so dass eine Festlegung des rohrförmigen Abschnitts 12 und der Ringdüse 9 an dem Gehäuseabschnitt 11 erfolgt.

Die Ringdüse 9 ist über einen Adapter 16 starr mit dem rohrförmigen Abschnitt 12 verbunden, wobei der Adapter 16 im Inneren eine Ausnehmung aufweist, durch die das Hilfsgas 6 aus dem rohrförmigen Abschnitt 12 in die Ringdüse 9 geleitet wird. Bei dem Hilfsgas 6 kann es sich um Luft oder um andere Gase handeln, insbesondere um inerte Gase, beispielsweise um Stickstoff.

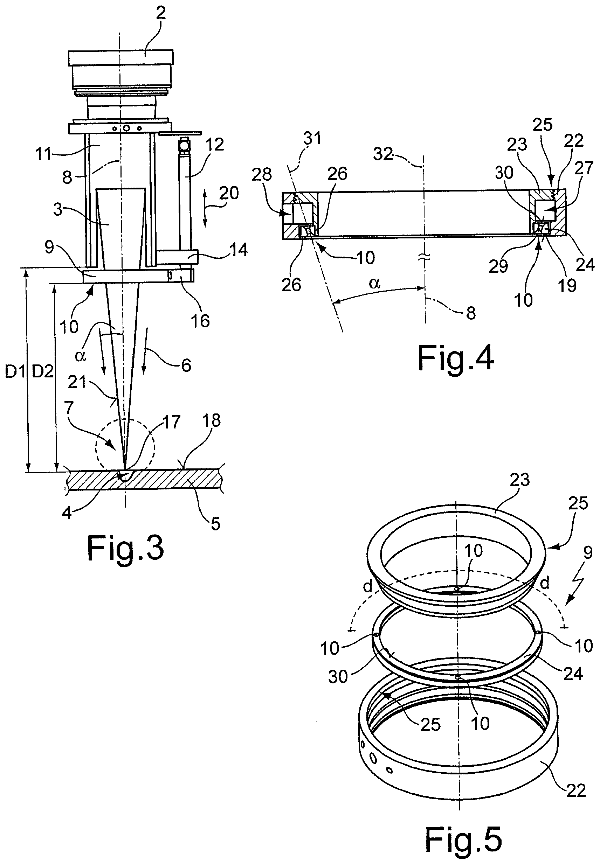

In **Fig. 3** sind die Fokussieroptik 2, der Gehäuseabschnitt 11 und die Klemmeinrichtung 14 sowie die Ringdüse 9, der Adapter 16 und der rohrförmige Abschnitt 12 in einer Seitenansicht über dem Werkstück 5 dargestellt. Durch die Fokussieroptik 2 wird der Laserstrahl 3 auf die Bearbeitungszone 4 des Werkstücks 5, insbesondere in einem Fokuspunkt 17, fokussiert. Dabei durchdringt der Laserstrahl 3 zumindest teilweise den Bearbeitungsbereich 7, der die Bearbeitungszone 4 des Werkstücks 5 umgibt. Bei dem Bearbeitungsbereich 7 handelt es sich um einen Volumenbereich, der sich ausgehend von der Werkstückoberseite 18 in Richtung zu dem Laserbearbeitungskopf 1 hin erstreckt.

Der Laserbearbeitungskopf 1, genauer gesagt das freie Ende des Gehäuseabschnitts 11 des Laserbearbeitungskopfs 1, ist während der Laserbearbeitung des Werkstücks 5 in einem Arbeitsabstand D1 von der Werkstückoberseite 18 beabstandet. In Fig. 3 ist die Ringdüse 9 in geringer Entfernung von der oberen Position (vgl. Fig. 2a) dargestellt. Dabei ist die Ringdüse 9, insbesondere eine Stirnseite der Ringdüse 9, an der die Mehrzahl von Austrittsöffnungen 10 angeordnet sind, in einem Abstand D2 von der Werkstückoberseite 18 beabstandet. Ist der Arbeitsabstand D1 entsprechend der jeweiligen Bearbeitungssituation (zum Beispiel der Dicke des zu bearbeitenden Werkstücks 5, der Laserstrahlintensität oder der Fokuslage etc.) bekannt, so kann der Abstand D2 der Ringdüse 9 vom Werkstück 5 durch entsprechende Handhabung der Klemmeinrichtung 14 und des rohrförmigen Abschnitts 12 (durch Verschieben des rohrförmigen Abschnitts 12 entlang einer zur Laserstrahlachse 8 parallelen Richtung 20) verändert werden.

Die Mehrzahl von Austrittsöffnungen 10 der Ringdüse 9 ist derart ausgebildet, dass das Hilfsgas 6 unter einem (spitzen) Winkel α zur Laserstrahlachse 8 ausströmt und im vorliegenden Beispiel im Wesentlichen parallel zu einer Mantelfläche 21 des konusförmigen fokussierten Laserstrahls 3 verläuft, d.h. der halbe Öffnungswinkel des fokussierten Laserstrahls 3 stimmt im Wesentlichen mit dem spitzen Winkel α überein. Auf diese Weise kann der Bereich, in den aufsteigende Metalldämpfe eindringen bzw. in dem sich die Metalldampffackel ausbildet, besonders vorteilhaft auf einen werkstücknahen Bereich 7 begrenzt werden. Auch ist eine solche im Wesentlichen parallele Ausrichtung günstig, da in diesem Fall nur ein geringer Anteil des Hilfsgases 6 in den Bereich der Bearbeitungszone 4 gelangt, sodass ölfreie Druckluft als Hilfsgas 6 verwendet werden kann. Es versteht sich aber, dass für den Fall, dass eine im Wesentlichen oxidfreie Schmelze gewünscht ist, eine prozessnahe Schutzabdeckung mit herkömmlichen, inerten Gasen realisiert werden muss. Eine solche Schutzabdeckung kann durch das von der Ringdüse 9 bereitgestellte Hilfsgas 6 oder ggf. durch weitere Zuführungseinrichtungen zur Zuführung von Hilfsgasen zur Bearbeitungszone 4 erfolgen.

Ist die Ringdüse 9 bzw. der Laserbearbeitungskopf 1 in vergleichsweise großer Entfernung von der Werkstückoberseite 18, bspw. direkt unterhalb eines (nicht gezeigten) Querluftstroms angeordnet, so vereinigen sich die durch die Pfeile 6 veranschaulichten Hilfsgasströme 6, welche durch die einzelnen Austrittsöffnungen 10 treten, oberhalb der Werkstückoberseite 18. Die Metalldampffackel wird in dieser Position weitgehend verdrängt, sie befindet sich bspw. ca. 10 mm über der Bearbeitungszone 4 (Kapillare). In diesem Fall ist fast der gesamte Bereich zwischen Werkstück 5 und Ringdüse 9 partikelfrei.

Ist die Ringdüse 9 in einer geringeren Entfernung zur Werkstückoberseite 18 angeordnet, beispielsweise wie in **Fig 3** gezeigt, so vereinigen sich die Volumenströme 6 an der Werkstückoberseite 18. In dieser Position bzw. in diesem Abstand A2 ist der Volumenstrom minimal, jedoch hat sich die Störkontur gegenüber der vorherigen Position vergrößert. In der in Fig. 3 gezeigten Position kann der Hilfsgasverbrauch bzw. der Aufwand zur Erzeugung und Bereitstellung des Hilfsgases 6 wesentlich reduziert werden. Es versteht sich aber, dass die den Metalldampf verdrängende Wirkung des Hilfsgases 6 auch bei größeren als den minimalen Volumenströmen in vorteilhafter Weise gegeben ist.

Wird der Abstand der Ringdüse 9 zu Werkstückoberfläche 18 weiter verringert, so treffen die Volumenströme 6 einzeln auf die Werkstückoberseite 18, d.h. ihr Schnittpunkt würde unterhalb der Werkstückoberfläche 18 liegen. In diesem Fall wird die Metalldampffackel nur unzureichend verdrängt. Jedoch kann durch die Wahl eines anderen (größeren) Winkels α erreicht werden, dass sich die Volumenströme 6 auch bei einem solchen vergleichsweise geringen Abstand D2 vom Werkstück 5 oberhalb der Werkstückoberseite 18 vereinigen. Typische Werte für die der Gasdüse 9 zugeführten Volumenströme liegen bei ca. 20 l/min bis ca. 60 l/min. Die Strömungsgeschwindigkeit des Hilfsgases 6 kann beispielsweise zwischen ca. 4 und 12 m/min betragen, was beispielsweise zu einem Druckanstieg in der in der Bearbeitungszone gebildeten Kapillare von nur ca. 1 mbar führt. Dieser sehr geringe Druckanstieg zeigt, dass das Hilfsgas 6 nicht in die Kapillare geblasen wird.

**Fig. 4** zeigt die Ringdüse 9 für den Laserbearbeitungskopf 1 in einem Querschnitt. Die Ringdüse 9 umfasst ein erstes, im Wesentlichen radial außen liegendes Ringteil 22, sowie ein zweites, im Wesentlichen radial innen liegendes Ringteil 23 sowie einen Wechselring 24. Das erste Ringteil 22 und das zweite Ringteil 23 sind über eine Schraubverbindung 25 lösbar miteinander verbunden. An dem ersten und zweiten Ringteil 22, 23 sind ferner Aufnahmen 26 für den Wechselring 24 vorgesehen, sodass dieser zwischen das erste und das zweite Ringteil 22, 23 gasdicht eingelegt und zwischen diesen beim Verschrauben festgelegt werden kann.

Das erste Ringteil 22, das zweite Ringteil 23 und der Wechselring 24 begrenzen gemeinsam einen ringförmigen Gasverteilungsraum 27, wobei zum Anschluss der Zuführung 13 für das Hilfsgas 6 (beispielsweise zum Anschluss des Adapters 16) an dem ersten Ringteil 22 eine in den Gasverteilungsraum 27 mündende, seitliche Eintrittsöffnung 28 ausgebildet ist. An dem Wechselring 24 ist darüber hinaus die Mehrzahl von Austrittsöffnungen 10 für das Hilfsgas 6 gebildet, wobei die Austrittsöffnungen 10 an der axialen Außenseite 19 des Wechselrings 24 münden. Die Austrittsöffnungen 10 im Wechselring 24 weisen im vorliegenden Beispiel einen variierenden Strömungsquerschnitt 29 auf, der sich von einer axialen Innenseite 30 des Wechselrings 24 bis zu der axialen Außenseite 19 des Wechselrings 24 erstreckt. Die Längsachsen 31 der Austrittsöffnungen 10 sind unter dem spitzen Winkel α zur Rotationsachse 32 der Ringdüse 9 bzw. zur Laserstrahlachse 8 ausgerichtet. Die Längsachsen der Austrittsöffnungen 10 verschiedener Wechselringe 24 können zur Rotationsachse 32 der Ringdüse 9 unterschiedliche Winkel α einnehmen. Auf diese Weise kann der Volumenstrom durch die Ringdüse 9 in Abhängigkeit vom Arbeitsabstand D1 in vorteilhafter Weise minimiert werden.

Schließlich zeigt **Fig. 5** eine Explosionsdarstellung der Ringdüse 9 gemäß Fig. 4. Aus Fig. 5 sind auf der axialen Innenseite 30 des Wechselrings 24 vier Austrittsöffnungen 10 ersichtlich, die in regelmäßigen Abständen d in Umfangsrichtung an dem Wechselring 24 angeordnet und auf einen gemeinsamen Punkt auf der Laserstrahlachse 8 ausgerichtet sind. Eine solche Anordnung ermöglicht eine besonders gleichmäßige Verdrängung der Metalldampffackel.

Durch die in Fig. 5 gut zu erkennende Dreiteiligkeit der Ringdüse 9 kann diese besonders einfach zerlegt und wieder zusammengebaut werden, wobei insbesondere der durch die Metalldampffackel bzw. die Metallspritzer typischerweise am stärksten zur Verschmutzung neigende Wechselring 24 besonders einfach ausgewechselt, erneuert oder gereinigt werden kann, da zu diesem Zweck lediglich die Schraubverbindung 25 zwischen dem ersten und dem zweiten Ringteil 22, 23 gelöst werden muss.

Der leichte und einfache Zugang zum Wechselring 24 erlaubt darüber hinaus vorteilhaft die schnelle Auswechslung einer Vielzahl unterschiedlicher Wechselringe 24 mit jeweils unterschiedlichen Eigenschaften, beispielsweise unterschiedlichen (spitzen) Winkeln α der Austrittsöffnungen 10 in Abhängigkeit davon, welchen Öffnungswinkel die den Laserstrahl 3 begrenzende konusförmige Mantelfläche 21 in einer jeweiligen Bearbeitungssituation aufweist bzw. in welchem Abstand von der Werkstückoberfläche 18 die Ringdüse 9 angeordnet ist. Auch ein Wechselring 24 mit einem vollständig oder teilweise umlaufenden Ringspalt (mit beispielsweise ca. 0,02 - 0,03 mm Spaltdurchmesser) als Austrittsöffnung 10 ist möglich. Bei einem vollständig umlaufenden Ringspalt sind typischer Weise dünne Verbindungsstege in dem Ringspalt vorgesehen, um den Wechselring 24 zusammenzuhalten.

## Patentansprüche

1. Ringdüse (9) für einen Laserbearbeitungskopf (1) zum Einbringen eines Hilfsgases (6) in einen Bereich (7), der eine Bearbeitungszone (4) eines Werkstücks (5) umgibt, umfassend:
ein erstes Ringteil (22) und ein zweites Ringteil (23), die miteinander lösbar verbunden sind und gemeinsam einen ringförmigen Gasverteilungsraum (27) begrenzen,
wobei zum Anschluss einer Zuführung (13, 16) für das Hilfsgas (6) an mindestens einem Ringteil (22) eine in den Gasverteilungsraum (27) mündende Eintrittsöffnung (28) ausgebildet ist,
**dadurch gekennzeichnet,**
**dass** die Ringdüse (9) einen Wechselring (24) aufweist, der gemeinsam mit dem ersten Ringteil (22) und dem zweiten Ringteil (23) den Gasverteilungsraum (27) begrenzt, wobei an dem Wechselring (24) mindestens eine Austrittsöffnung (10) für das Hilfsgas (6) ausgebildet ist.

2. Ringdüse nach Anspruch 1, **dadurch gekennzeichnet, dass** an dem Wechselring (24) eine Mehrzahl von Austrittsöffnungen (10) für das Hilfsgas (6) ausgebildet ist.

3. Ringdüse nach Anspruch 2, **dadurch gekennzeichnet, dass** die Austrittsöffnungen (10) in regelmäßigen Abständen (d) in Umfangsrichtung an dem Wechselring (24) angeordnet sind.

4. Ringdüse nach einem der vorhergehenden Ansprüche, **dadurch gekennzeichnet, dass** mindestens eine Austrittsöffnung (10) einen variierenden Strömungsquerschnitt (29) aufweist.

5. Ringdüse nach einem der vorhergehenden Ansprüche, **dadurch gekennzeichnet, dass** die Längsachse (31) der mindestens einen Austrittsöffnung (10) unter einem spitzen Winkel (α) zur Rotationsachse (32) der Ringdüse (9) ausgerichtet ist.

6. Ringdüse nach einem der vorhergehenden Ansprüche, **dadurch gekennzeichnet, dass** das erste Ringteil (22) und/oder das zweite Ringteil (23) und/oder der Wechselring (24) miteinander verschraubt (25) sind.

7. Laserbearbeitungskopf (1), umfassend:
eine Fokussieroptik (2) zur Fokussierung eines Laserstrahls (3) auf eine Bearbeitungszone (4) eines Werkstücks (5), sowie
eine koaxial zur Laserstrahlachse (8) angeordnete Ringdüse (9) nach einem der vorhergehenden Ansprüche zum Einbringen eines Hilfsgases (6) in einen die Bearbeitungszone (4) des Werkstücks (5) umgebenden Bereich (7).

## Claims

1. Annular nozzle (9) for a laser processing head (1) for introducing an auxiliary gas (6) into a region (7) surrounding a processing zone (4) of a workpiece (5), comprising:
a first annular portion (22) and a second annular portion (23) which are releasably connected to each other and which together delimit an annular gas distribution chamber (27),
there being formed on at least one annular portion (22) an inlet opening (28) which opens in the gas distribution chamber (27) in order to connect a supply (13, 16) for the auxiliary gas (6),
**characterized in that**
the annular nozzle (9) comprises a changing ring (24) which together with the first annular portion (22) and the second annular portion (23) delimit the gas distribution chamber (27), there being formed on the changing ring (24) at least one outlet opening (10) for the auxiliary gas (6).

2. Annular nozzle according to claim 1, **characterized in that** a plurality of outlet openings (10) for the auxiliary gas (6) are formed on the changing ring (24).

3. Annular nozzle according to claim 2, **characterised in that** the outlet openings (10) are arranged with regular spacing (d) in a peripheral direction on the changing ring (24).

4. Annular nozzle according to any one of the preceding claims, **characterised in that** at least one outlet opening (10) has a varying flow cross-section (29).

5. Annular nozzle according to any one of the preceding claims, **characterised in that** the longitudinal axis (31) of the at least one outlet opening (10) is orientated at an acute angle (α) with respect to the rotation axis (32) of the annular nozzle (9).

6. Annular nozzle according to any one of the preceding claims, **characterised in that** the first annular portion (22) and/or the second annular portion (23) and/or the changing ring (24) is/are screwed (25) to each other.

7. Laser processing head (1) comprising:
an optical focusing unit (2) for focusing a laser beam (3) on a processing zone (4) of a workpiece (5), as well as
an annular nozzle (9) according to any one of the preceding claims, which is arranged coaxially with respect to the laser beam axis (8), for introducing an auxiliary gas (6) into a region (7) surrounding the processing zone (4) of the workpiece (5).

## Revendications

1. Buse annulaire (9) pour une tête d'usinage au laser (1), pour l'introduction d'un gaz auxiliaire (6) dans une région (7) qui entoure une zone d'usinage (4) d'une pièce (5), comprenant :
une première partie annulaire (22) et une deuxième partie annulaire (23), qui sont assemblées l'une à l'autre de manière amovible et qui délimitent ensemble un espace annulaire (27) de distribution de gaz,
sachant qu'afin de raccorder une alimentation (13, 16) pour le gaz auxiliaire (6), une ouverture d'introduction (28) débouchant dans l'espace (27) de distribution de gaz est réalisée sur au moins une partie annulaire (22),
**caractérisée en ce que** la buse annulaire (9) présente une bague interchangeable (24), qui délimite conjointement avec la première partie annulaire (22) et la deuxième partie annulaire (23) l'espace (27) de distribution de gaz, sachant qu'au moins une ouverture de sortie (10) pour le gaz auxiliaire (6) est réalisée sur la bague interchangeable (24).

2. Buse annulaire selon la revendication 1, **caractérisée en ce qu'**une pluralité d'ouvertures de sortie (10) pour le gaz auxiliaire (6) sont réalisées sur la bague interchangeable (24).

3. Buse annulaire selon la revendication 2, **caractérisée en ce que** les ouvertures de sortie (10) sont disposées sur la bague interchangeable (24) à intervalles réguliers (d) dans la direction périphérique.

4. Buse annulaire selon l'une des revendications précédentes, **caractérisée en ce qu'**au moins une ouverture de sortie (10) présente une section d'écoulement variable (29).

5. Buse annulaire selon l'une des revendications précédentes, **caractérisée en ce que** l'axe longitudinal (31) de l'ouverture de sortie (10) au moins unique est orienté sous un angle aigu (α) par rapport à l'axe de rotation (32) de la buse annulaire (9).

6. Buse annulaire selon l'une des revendications précédentes, **caractérisée en ce que** la première partie annulaire (22) et/ou la deuxième partie annulaire (23) et/ou la bague interchangeable (24) sont assemblées entre elles par boulonnage (25).

7. Tête d'usinage au laser (1), comprenant : une optique de focalisation (2) pour la focalisation d'un rayon laser (3) sur une zone d'usinage (4) d'une pièce (5), ainsi qu'une buse annulaire (9) selon l'une des revendications précédentes, disposée coaxialement par rapport à l'axe (8) du rayon laser, pour l'introduction d'un gaz auxiliaire (6) dans une région (7) entourant la zone d'usinage (4) de la pièce (5).
